(19) Europäisches Patentamt
European Patent Office
Office européen des brevets

(11) **EP 4 492 696 A1**

(12) **EUROPEAN PATENT APPLICATION**
published in accordance with Art. 153(4) EPC

(43) Date of publication:
**15.01.2025 Bulletin 2025/03**

(21) Application number: **22934234.0**

(22) Date of filing: **31.03.2022**

(51) International Patent Classification (IPC):
**H04B 1/16** (2006.01)

(52) Cooperative Patent Classification (CPC):
**H04B 1/16**

(86) International application number:
**PCT/CN2022/084546**

(87) International publication number:
**WO 2023/184395 (05.10.2023 Gazette 2023/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Huawei Technologies Co., Ltd.**
**Shenzhen, Guangdong 518129 (CN)**

(72) Inventor: **LI, Huanbo**
**Shenzhen, Guangdong 518129 (CN)**

(74) Representative: **Körber, Martin Hans**
**Mitscherlich PartmbB**
**Patent- und Rechtsanwälte**
**Karlstraße 7**
**80333 München (DE)**

(54) **RECEIVER, COMMUNICATION DEVICE AND SIGNAL PROCESSING METHOD**

(57) A receiver, a communication device, and a signal processing method are provided, whose consumption power is low and occupied chip area is small, so as to improve precision of monitoring a transmit channel and improve precision of calibration. The receiver is configured to receive a first signal. The receiver includes a frequency mixer, a phase switching module, and an intermediate frequency processor. The phase switching module is coupled to the frequency mixer, the phase switching module is configured to provide a first local oscillator signal for the frequency mixer or provide a second local oscillator signal for the frequency mixer, and a difference between a phase of the first local oscillator signal and a phase of the second local oscillator signal is a first phase difference. The frequency mixer is coupled to the intermediate frequency processor, and is configured to: receive a signal provided by the phase switching module, perform frequency mixing on the first signal based on the signal provided by the phase switching module, and provide a signal obtained through frequency mixing for the intermediate frequency processor. The intermediate frequency processor is configured to amplify the signal provided by the frequency mixer.

FIG. 3

## Description

### TECHNICAL FIELD

This application relates to the field of electronic technologies, and in particular, to a receiver, a communication device, and a signal processing method.

### BACKGROUND

Currently, a receive monitoring link is usually disposed in a phased array transceiver to monitor and calibrate a radio frequency characteristic of a transmit (transmit, TX) channel, for example, monitor and calibrate amplitude consistency and phase consistency. The receive (receive, RX) monitoring link is also generally referred to as a receiver for monitor (RX for monitor, MRX). The MRX may receive radio frequency signals coupled from TX channels and down-convert the radio frequency signals into intermediate frequency signals. A conventional MRX supports generation of two intermediate frequency signals: an in-phase (in-phase, I) intermediate frequency signal and a quadrature (quadrature, Q) intermediate frequency signal. The conventional MRX includes an I-path processing circuit and a Q-path processing circuit. The I-path processing circuit includes an I-path amplifier and an I-path frequency mixer, so that the I-path processing circuit can generate an I-path intermediate frequency signal based on an I-path oscillator signal. The Q-path processing circuit includes a Q-path amplifier and a Q-path frequency mixer, so that the Q-path processing circuit can generate a Q-path intermediate frequency signal based on a Q-path oscillator signal. In this manner, both the I-path processing circuit and the Q-path processing circuit need to be in an operating state, and therefore power consumption is high. In addition, an amplification characteristic of an I-path local oscillator amplifier and an amplification characteristic of a Q-path local oscillator amplifier are inconsistent, and an amplification characteristic of the I-path frequency mixer and an amplification characteristic of the Q-path frequency mixer are inconsistent. As a result, an amplitude error and a phase error exist between the I-path intermediate frequency signal and the Q-path intermediate frequency signal. Consequently, monitoring precision of the conventional MRX is poor, resulting in poor precision of calibration.

### SUMMARY

This application provides a receiver, a communication device, and a signal processing method, to consume low power and occupy a small chip area, so as to improve precision of monitoring a transmit channel and improve precision of calibration.

According to a first aspect, an embodiment of this application provides a receiver. The receiver may include a frequency mixer, a phase switching module, and an intermediate frequency processor. The phase switching module is coupled to the frequency mixer, and the phase switching module may provide a first local oscillator signal for the frequency mixer or provide a second local oscillator signal for the frequency mixer. A difference between a phase of the first local oscillator signal and a phase of the second local oscillator signal is a preset first phase difference. The frequency mixer is coupled to the intermediate frequency processor, and may receive a signal provided by the phase switching module, perform frequency mixing on a first signal based on the signal provided by the phase switching module, and provide a signal obtained through frequency mixing for the intermediate frequency processor. The intermediate frequency processor is configured to amplify the signal provided by the frequency mixer.

In this embodiment of this application, the receiver may be configured to calibrate a radio frequency signal transmitted through a transmit channel or by a transmitter. The receiver includes the frequency mixer. The phase switching module provides the first local oscillator signal for the frequency mixer, so that the frequency mixer performs down conversion on the first signal based on the first local oscillator signal, to obtain a first intermediate frequency signal. The phase switching module may alternatively provide the second local oscillator signal for the frequency mixer, so that the frequency mixer performs down conversion on the first signal based on the second local oscillator signal, to obtain a second intermediate frequency signal. It can be seen that the receiver can implement two types of down conversion. The two types of down conversion are both processed by a same phase switching module and a same frequency mixer, so that power consumption is low, and a small chip area is occupied. In addition, amplification characteristics or frequency conversion characteristics of the two types of down conversion can be consistent, which helps improve precision of calibrating the transmit channel. In some scenarios, the receiver may be implemented as a receiver for monitor, and an amplitude and a phase of a signal output by the frequency mixer may be used to monitor the first signal and calibrate a signal transmitted through the transmit channel. In some scenarios, the first signal may be coupled to a transmitted signal output by the transmitter or through the transmit channel. For example, the receiver may be coupled to a coupler. The coupler is coupled to the transmitter or the transmit channel. In a scenario in which the transmit channel or the transmitter is calibrated, the coupler may extract a partial signal from the transmitted signal output by the transmitter or the transmitted signal output through the transmit channel, and provide the partial signal for the receiver, that is, provide the first signal for the receiver. Therefore, the coupler may provide the first signal for the receiver, and is configured to calibrate the transmitted signal output by the transmitter or through the transmit channel.

In a possible design, the difference between the phase of the first local oscillator signal and the phase of the second local oscillator signal is the preset first phase difference, for example, 90°. In this embodiment of this application, the first local oscillator signal may be orthogonal to the second local oscillator signal. The first local oscillator signal may be implemented as a local oscillator in-phase signal, that is, a local oscillator I-path signal, and the second local oscillator signal may be implemented as a local oscillator quadrature signal, that is, a local oscillator Q-path signal.

In a possible design, the phase switching module may include an in-phase/quadrature IQ generation network and an amplifier. The IQ generation network may receive a signal provided by a local oscillator, such as a local oscillator signal. The IQ generation network may be used to generate a local oscillator in-phase signal and a local oscillator quadrature signal based on the signal provided by the local oscillator. The amplifier may be configured to amplify a signal provided by the IQ generation network. In this embodiment of this application, the phase switching module may generate the local oscillator in-phase signal and the local oscillator quadrature signal based on the received local oscillator signal. The amplifier may amplify the signal provided by the IQ generation network. For example, the amplifier amplifies the local oscillator in-phase signal to obtain the first local oscillator signal, and/or amplifies the local oscillator quadrature signal to obtain the second local oscillator signal.

In a possible design, the amplifier may include a first amplification circuit and a second amplification circuit. The first amplification circuit is coupled to a power supply module. The first amplification circuit is coupled to the frequency mixer, and the first amplification circuit is coupled to the IQ generation network. The second amplification circuit is coupled to the power supply module, the second amplification circuit is coupled to the frequency mixer, and the second amplification circuit is coupled to the IQ generation network. The power supply module is configured to provide an operating voltage for the first amplification circuit or the second amplification circuit. The first amplification circuit may be configured to: driven by the operating voltage, amplify the local oscillator in-phase signal and then output an amplified signal to the frequency mixer. The second amplification circuit may be configured to: driven by the operating voltage, amplify the local oscillator quadrature signal and then output an amplified signal to the frequency mixer.

In this embodiment of this application, the amplifier in the phase switching module may include a plurality of amplification circuits that are configured to amplify the local oscillator in-phase signal and the local oscillator quadrature signal. For example, the first amplification circuit may amplify the local oscillator in-phase signal and output the amplified signal to the frequency mixer, and the second amplification circuit may amplify the local oscillator quadrature signal and output the amplified signal to the frequency mixer. In this way, the phase switching module provides the first local oscillator signal and the second local oscillator signal for the frequency mixer. The power supply module may supply power to the first amplification circuit and the second amplification circuit in a time-sharing manner. The power supply module supplies power to the first amplification circuit to enable the first amplification circuit to operate, or supplies power to the second amplification circuit to enable the second amplification circuit to operate. The first amplification circuit and the second amplification circuit operate in a time-sharing manner, so that the phase switching module may provide the first local oscillator signal and the second local oscillator signal for the frequency mixer in a time-sharing manner. The frequency mixer may perform frequency mixing on the first local oscillator signal, or may perform frequency mixing on the second local oscillator signal, to ensure high frequency conversion characteristic consistency of the receiver.

In a possible design, the phase switching module may further include a selection unit. The amplifier may include a third amplification circuit. The selection unit is coupled to the IQ generation network, and the selection unit is coupled to the third amplification circuit. The selection unit may selectively provide the local oscillator in-phase signal and the local oscillator quadrature signal for the third amplification circuit. The third amplification circuit may amplify a signal provided by the selection unit, and output an amplified signal to the frequency mixer.

In this embodiment of this application, the amplifier in the phase switching module may include one amplification circuit, for example, the third amplification circuit. The selection unit selects one signal from the local oscillator in-phase signal and the local oscillator quadrature signal provided by the IQ generation network, and provides the selected signal for the third amplification circuit. The third amplification circuit receives the local oscillator in-phase signal provided by the selection unit, or receives the local oscillator quadrature signal provided by the selection unit. One amplification circuit amplifies the local oscillator in-phase signal, or amplifies the local oscillator quadrature signal, to improve amplification characteristic consistency of the phase switching module.

In some possible implementations, the selection unit in the phase switching module may include a single-pole multi-throw switch. A throwable part of the single-pole multi-throw switch is coupled to the third amplification circuit. A first contact end of the single-pole multi-throw switch is coupled to a first end of the IQ generation network, and the first contact end is configured to receive the local oscillator in-phase signal. A second contact end of the single-pole multi-throw switch is coupled to a second end of the IQ generation network, and the second contact end is configured to receive the local oscillator quadrature signal. In this embodiment of this application, the single-pole multi-throw switch may selectively provide the local oscillator in-phase signal and the local oscillator quadrature signal for the third amplification circuit. The first contact end of the single-pole multi-throw switch is connected to the throwable part, so that the local oscillator in-phase signal can be transmitted to the third amplification circuit. The second contact end of the single-pole multi-throw switch is connected to the throwable part, so that the local oscillator quadrature signal can be transmitted to the third amplification circuit.

In some other possible implementations, the selection unit may include a first switch and a second switch. The first switch may be configured to control transmission of the local oscillator in-phase signal. The second switch may be configured to control transmission of the local oscillator quadrature signal. In some examples, a first end of the first switch is coupled to the IQ generation network, and a second end of the first switch is coupled to the third amplification circuit. A first end of the second switch is coupled to the IQ generation network, and a second end of the second switch is coupled to the third amplification circuit. In this example, the first switch is in an on state, and the first switch may transmit the local oscillator in-phase signal to the third amplification circuit. The second switch is in an on state, and the second switch may transmit the local oscillator quadrature signal to the third amplification circuit.

In some other examples, the selection unit further includes a first transmission line and a second transmission line. A first end of the first transmission line is coupled to a ground end through the first switch, the first end of the first transmission line is coupled to the IQ generation network, and a second end of the first transmission line is coupled to the third amplification circuit. A first end of the second transmission line is coupled to the ground end through the second switch, the first end of the second transmission line is coupled to the IQ generation network, and a second end of the second transmission line is coupled to the third amplification circuit. In this example, the first switch is in an off state, so that the local oscillator in-phase signal output by the IQ generation network can be transmitted to the third amplification circuit. If the first switch is in an on state, the local oscillator in-phase signal is transmitted to the ground end through the first switch. Similarly, the second switch is in an off state, so that the local oscillator quadrature signal output by the IQ generation network can be transmitted to the third amplification circuit. If the second switch is in the off state, the local oscillator quadrature signal is transmitted to the ground end through the second switch. In this embodiment of this application, the on/off state of the first switch and the on/off state of the second switch are adjusted, to adjust the signal input to the third amplification circuit, and ensure high amplification characteristic consistency of processing the local oscillator in-phase signal and the local oscillator quadrature signal. The frequency mixer may perform frequency mixing on the first local oscillator signal, or may perform frequency mixing on the second local oscillator signal, to ensure high frequency conversion characteristic consistency.

In a possible design, the phase switching module may include a phase shifter and a fourth amplification circuit. The phase shifter is coupled to the fourth amplification circuit, and the fourth amplification circuit is coupled to the frequency mixer. The phase shifter is configured to: receive a local oscillator signal; and selectively perform phase shifting on the local oscillator signal, and output a signal obtained through phase shifting on the local oscillator signal to the fourth amplification circuit. The first local oscillator signal is an amplified signal of the local oscillator signal, the second local oscillator signal is an amplified signal of a third signal, the third signal is the signal obtained through phase shifting on the local oscillator signal, and a difference between a phase of the third signal and a phase of the local oscillator signal is a preset phase difference. The fourth amplification circuit is configured to: amplify the signal output by the phase shifter, and output an amplified signal to the frequency mixer.

In this embodiment of this application, the phase shifter may provide the local oscillator signal or the third signal for the fourth amplification circuit in a time-sharing manner, so that the fourth amplification circuit amplifies the local oscillator signal and the third signal in a time-sharing manner. This can ensure high amplification characteristic consistency of processing the local oscillator signal and the third signal. The frequency mixer may perform frequency mixing on the first local oscillator signal, or may perform frequency mixing on the second local oscillator signal, to ensure high frequency conversion characteristic consistency.

In a possible design, in some scenarios, the receiver further includes a trans-impedance amplifier TIA. The TIA is coupled to the frequency mixer. The TIA may amplify a signal output by the frequency mixer. An amplitude and a phase of the signal amplified by the TIA may be used to monitor and calibrate the transmitted signal output by the transmitter or through the transmit channel.

According to a second aspect, an embodiment of this application provides a communication device that may include a transmitter, a circuit board, and the receiver according to any one of the first aspect and the designs of the first aspect. The receiver may be disposed on the circuit board, and the transmitter may also be disposed on the circuit board. The transmitter may transmit a signal, and the receiver may receive a first signal. The first signal is coupled to the transmitted signal output by the transmitter. The receiver performs frequency mixing on the first signal.

In a possible design, the communication device may further include a signal processor. The signal processor may calibrate the transmitted signal from the transmitter based on a signal output by the receiver.

According to a third aspect, an embodiment of this application provides a signal processing method, and the method may be performed or implemented by a receiver. The receiver may be the receiver according to any one of the possible designs of the first aspect. The method may include one or more of the following steps: A phase switching module provides a first local oscillator signal or a second local oscillator signal for a frequency mixer, where a difference between a phase of the first local oscillator signal and a phase of the second local oscillator signal is a preset first phase difference; the frequency mixer performs, based on a signal provided by the phase switching module, frequency mixing on a first signal received by the receiver; and an intermediate frequency processor amplifies a signal provided by the frequency mixer.

In a possible design, that a phase switching module provides a first local oscillator signal for a frequency mixer or provides a second local oscillator signal for a frequency mixer may include: An in-phase/quadrature IQ generation network generates a local oscillator in-phase signal and a local oscillator quadrature signal based on a signal provided by a local oscillator; and an amplifier amplifies a signal provided by the IQ generation network.

In a possible design, that an amplifier amplifies a signal provided by the IQ generation network may include: amplifying the local oscillator in-phase signal to obtain the first local oscillator signal; and/or amplifying the local oscillator quadrature signal to obtain the second local oscillator signal.

In a possible design, that an amplifier amplifies a signal provided by the IQ generation network may further include: providing an operating voltage for a first amplification circuit or a second amplification circuit; the amplifying the local oscillator in-phase signal to obtain the first local oscillator signal may include: The first amplification circuit amplifies the local oscillator in-phase signal; and the amplifying the local oscillator quadrature signal to obtain the second local oscillator signal may include: The second amplification circuit amplifies the local oscillator quadrature signal.

In a possible design, that a phase switching module provides a first local oscillator signal for a frequency mixer or provides a second local oscillator signal for a frequency mixer may further include: A selection unit selectively provides the local oscillator in-phase signal or the local oscillator quadrature signal for a third amplification circuit; and that an amplifier amplifies a signal provided by the IQ generation network may include: The third amplification circuit amplifies a signal provided by the selection unit, and outputs an amplified signal to the frequency mixer.

In a possible design, that a selection unit selectively provides the local oscillator in-phase signal or the local oscillator quadrature signal for a third amplification circuit may include the following operation: controlling a first switch or controlling a second switch. The first switch is configured to control transmission of the local oscillator in-phase signal, and the second switch is configured to control transmission of the local oscillator quadrature signal.

For technical effects that can be achieved in the second aspect and any one of the possible designs of the second aspect, or the third aspect and any one of the possible designs of the third aspect, refer to the technical effects that can be achieved in any one of the possible designs of the first aspect. Details are not described herein again.

**BRIEF DESCRIPTION OF DRAWINGS**

FIG. 1 is a diagram of a location of an MRX in a phased array system;
FIG. 2 is a diagram of a structure of a conventional MRX;
FIG. 3 is a diagram of a structure of a receiver;
FIG. 4 is a diagram of a structure of a phase switching module;
FIG. 5 is a diagram of a structure of another phase switching module;
FIG. 6 is a diagram of a structure of still another phase switching module;
FIG. 7 is a diagram of a structure of still another phase switching module;
FIG. 8 is a diagram of a structure of still another phase switching module;
FIG. 9 is a diagram of a structure of still another phase switching module;
FIG. 10 is a diagram of a structure of a communication device; and
FIG. 11 is a schematic flowchart of a signal processing method.

**DESCRIPTION OF EMBODIMENTS**

Usually, there are a plurality of TX channels in a phased array transceiver chip. Radio frequency features of the TX channels may be inconsistent (mismatched). For example, amplitudes and phases of transmitted signals from the TX channels are inconsistent. To ensure that an amplitude error and a phase error of the TX channels are small when a phased array system to which a phased array receiver belongs operates, the amplitudes and the phases of the TX channels may be monitored and calibrated via an MRX.

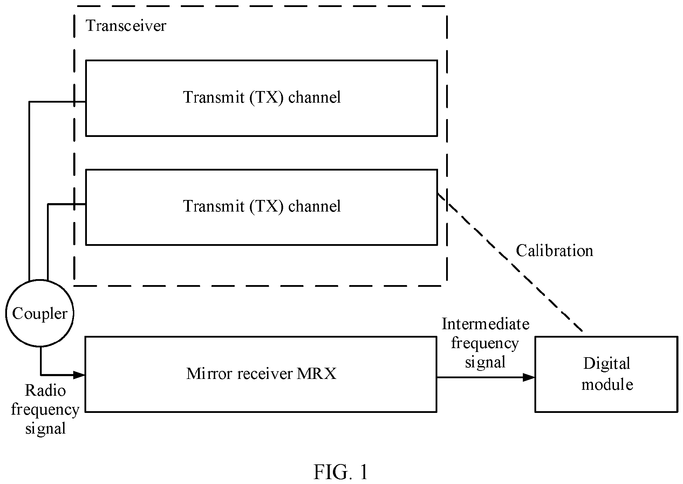

FIG. 1 is a diagram of a location relationship of an MRX in a phased array system. A transceiver may include one or more TX channels. Each TX channel may be coupled to a coupler. The coupler may be coupled to at least one TX channel, and may extract a partial signal from a transmitted signal output through the TX channel. In a scenario in which the TX channel is calibrated, the coupler may provide a first signal for the MRX. The first signal may be coupled to a transmitted signal output through any TX channel. In this way, the MRX may receive a radio frequency signal coupled from any TX channel. Generally, the coupler provides the MRX with a radio frequency signal coupled from any TX channel each time. Therefore, during operating, the MRX may process a radio frequency signal coupled from one TX channel each time. The MRX may perform, based on a signal provided by a local oscillator (denoted as an oscillator signal Loin for ease of description), down conversion on a radio frequency signal coupled from a TX channel, and down-convert the radio frequency signal into an intermediate frequency. Then, an analog-to-digital conversion and digital module (digital module for short) performs a signal amplitude and phase consistency detection process on the intermediate frequency signal output by the MRX. The digital module may calibrate each TX channel by adjusting a control codeword of the TX channel, to ensure high consistency between the TX channels when a phased array transceiver operates. Usually, in an initial phase of operating of a phased array transceiver chip, the MRX calibrates each TX channel. It can be learned from the foregoing description that a process of processing a radio frequency signal coupled from the TX channel by the MRX has great impact on monitoring and calibrating the TX channel.

If another interference signal or noise signal, for example, an image radio frequency signal, is introduced in a process in which the MRX down-converts the radio frequency signal into an intermediate frequency, precision of calibrating the TX channel is severely affected. Therefore, currently, the MRX generally supports two IQ orthogonal intermediate frequencies.

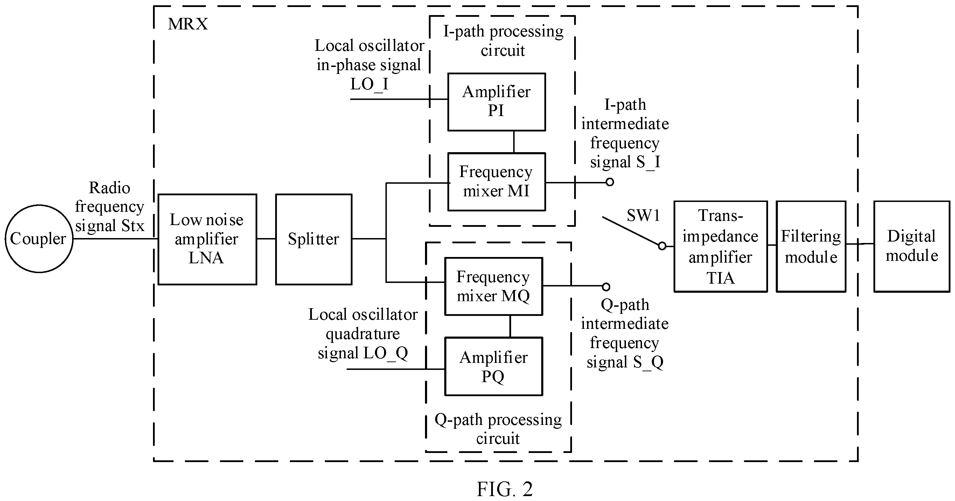

An IQ orthogonal generation network in a conventional MRX may generate a local oscillator in-phase signal LO_I and a local oscillator quadrature signal LO_Q based on an oscillator signal Loin. The oscillator signal Loin may be provided by a local oscillator. As shown in FIG. 2, a conventional MRX includes two down conversion processing circuits: an I-path processing circuit and a Q-path processing circuit. A transmitted signal output through a TX channel may pass through a coupler, and the coupler may extract a partial signal, denoted as a radio frequency signal Stx, from the transmitted signal. The coupler may provide the radio frequency signal Stx for the conventional MRX. The radio frequency signal Stx may be input to the I-path processing circuit and the Q-path processing circuit via a low noise amplifier (low noise amplifier, LNA) and a splitter (splitter) in the MRX.

The I-path processing circuit includes an amplifier PI and a frequency mixer MI. The amplifier PI receives a local oscillator in-phase signal LO_I, amplifies the local oscillator in-phase signal LO_I, and outputs an amplified signal to the frequency mixer MI. The frequency mixer MI receives the radio frequency signal Stx and the signal output by the amplifier PI, performs down conversion, and may output an I-path intermediate frequency signal S_I. The Q-path processing circuit includes an amplifier PQ and a frequency mixer MQ. The amplifier PQ receives a local oscillator quadrature signal LO_Q, amplifies the local oscillator quadrature signal LO_Q, and outputs an amplified signal to the frequency mixer MQ. The frequency mixer MQ receives the radio frequency signal Stx and the signal output by the amplifier PQ, performs down conversion, and may output a Q-path intermediate frequency signal S_Q.

An output end of the frequency mixer MI and an output end of the frequency mixer MQ are coupled to a trans-impedance amplifier (trans-impedance amplifier, TIA) through a switching switch SW1. The switching switch SW1 has a selective connection capability. The switching switch SW1 may connect the output end of the frequency mixer MI to the TIA, or connect the output end of the frequency mixer MQ to the TIA.

When the switching switch SW1 may connect the output end of the frequency mixer MI to the TIA, the I-path intermediate frequency signal S_I output by the frequency mixer MI may be processed by the TIA and a filtering module, and then output to a digital module. The filtering module in the conventional MRX may include a low-pass filter and/or a high-pass filter. The digital module performs consistency calibration on an amplitude and a phase of the I-path intermediate frequency signal.

Similarly, when the switching switch SW1 may connect the output end of the frequency mixer MQ to the TIA, the Q-path intermediate frequency signal S_Q output by the frequency mixer MQ may be processed by the TIA and a filtering module, and then output to a digital module. The digital module performs consistency calibration on an amplitude and a phase of the Q-path intermediate frequency signal.

The I-path intermediate frequency signal S_I and the Q-path intermediate frequency signal S_Q generated in the conventional MRX may be further used to eliminate image interference, or referred to as eliminating image signal interference, or referred to as eliminating image signal rejection, or referred to as eliminating image rejection. A process of rejecting an image signal is not described in detail in this application. The following briefly describes impact of the amplitudes and phases of the I-path intermediate frequency signal S_I and the Q-path intermediate frequency signal S_Q on image rejection effect. For details, refer to the following formula:

$$\mathrm{ImageRejection} = 10\log\left[\frac{1 + \gamma^2 + 2\gamma\cos(\phi)}{1 + \gamma^2 + 2\gamma\cos(\phi)}\right]$$

In the foregoing formula, $\gamma$ is a difference between the amplitude of the I-path intermediate frequency signal S_I and the amplitude of the Q-path intermediate frequency signal S_Q. The phase of the I-path intermediate frequency signal is $\Phi 1$, the phase of the Q-path intermediate frequency signal is marked as $\Phi Q$, and a difference $d\Phi$ between the phases of the two intermediate frequency signals is a difference between $\Phi I$ and $\Phi Q$. $\Phi$ may represent orthogonal imbalance between the I-path intermediate frequency signal and the Q-path intermediate frequency signal, for example, $\Phi = d\Phi - 90°$. ImageRejection is the image rejection effect, and is measured in dB. The formula can reflect a relationship between an amplitude and a phase of an intermediate frequency signal and image rejection effect. The impact of the amplitudes and phases of the I-path intermediate frequency signal S_I and the Q-path intermediate frequency signal S_Q on the image rejection effect can be clarified according to the formula.

In a structure of the conventional MRX, it is difficult to ensure consistency of an amplification characteristic of the amplifier PI of the I-path processing circuit and an amplification characteristic of the amplifier PQ of the Q-path processing circuit, and it is difficult to ensure consistency of a frequency conversion characteristic of the frequency mixer MI of the I-path processing circuit and a frequency conversion characteristic of the frequency mixer MQ of the Q-path processing circuit. It can be learned that the I-path processing circuit and the Q-path processing circuit each include respective amplifiers and respective frequency mixers. Therefore, it is difficult to ensure consistency of amplification characteristics and frequency conversion characteristics when the two down conversion circuits process the radio frequency signal Stx. As a result, the amplitude of the I-path intermediate frequency signal S_I and the amplitude of the Q-path intermediate frequency signal S_Q are inconsistent, and a difference between the phase of the I-path intermediate frequency signal S_I and the phase of the Q-path intermediate frequency signal S_Q is not ideal 90°, thereby affecting the image rejection effect. In addition, in the structure of the conventional MRX, both the I-path processing circuit and the Q-path processing circuit are in an operating state, so that power consumption is high. In addition, the conventional MRX occupies a large chip area. Due to layout location design, locations of the amplifier PI of the I-path processing circuit and the amplifier PQ of the Q-path processing circuit may be asymmetric, which aggravates inconsistency of the amplification characteristics of the amplifier PI and the amplifier PQ. When an operating frequency is high, parasitic effect is serious, and component inconsistency is large.

In view of this, this application provides an MRX, whose consumption power is low, and occupied chip area is small, to improve precision of calibrating a TX channel, and improve image rejection effect.

To make the objectives, technical solutions, and advantages of this application clearer, the following further describes this application in detail with reference to the accompanying drawings. A specific operation method in a method embodiment may also be applied to an apparatus embodiment or a system embodiment. It should be noted that, in descriptions of this application, "at least one" means one or more, and "a plurality of" means two or more. In view of this, in embodiments of the present invention, "a plurality of" may also be understood as "at least two". The term "and/or" describes an association relationship between associated objects and indicates that three relationships may exist. For example, A and/or B may indicate the following three cases: Only A exists, both A and B exist, and only B exists. In addition, the character "/", unless otherwise specified, generally indicates an "or" relationship between the associated objects. In addition, it should be understood that, in the descriptions of this application, terms such as "first" and "second" are merely used for distinguishing and description, but should not be understood as indicating or implying relative importance, or should not be understood as indicating or implying a sequence.

It should be noted that "coupling" in embodiments of this application may be understood as an electrical connection, and coupling between two electrical elements may be a direct or indirect connection between the two electrical elements. For example, that A is coupled to B may be that A is directly connected to B, or may be that A is indirectly connected to B through one or more other electrical elements. For example, that A is coupled to B may alternatively be that A is directly connected to C, C is directly connected to B, A and B are connected through C.

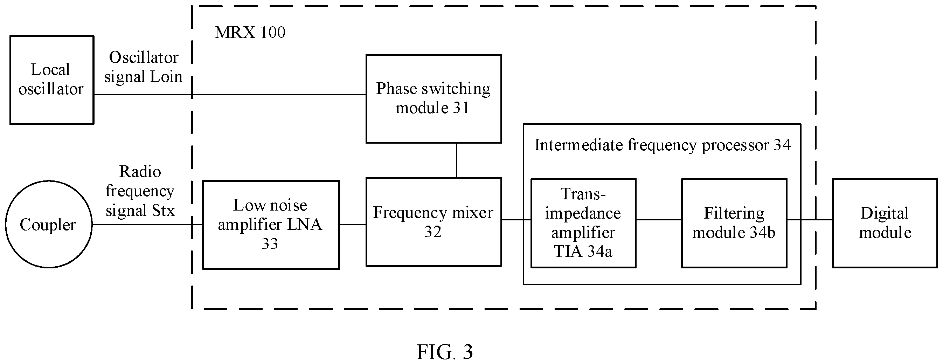

Refer to FIG. 3. An MRX 100 provided in an embodiment of this application may include a phase switching module 31 and a frequency mixer 32. The MRX 100 may be used in the foregoing phased array system. The MRX 100 may receive a signal coupled by a transmitter, for example, receive a radio frequency signal from a TX channel of a phased array receiver.

The phase switching module 31 may have a capability of providing two types of local oscillator signals. The phase switching module 31 may provide a first local oscillator signal for the frequency mixer 32. The phase switching module 31 may alternatively provide a second local oscillator signal for the frequency mixer 32. A difference between a phase $\phi1$ of the first local oscillator signal and a phase $\phi2$ of the second local oscillator signal may be equal to a preset phase difference $d\phi$, where a relationship between $d\phi$, and the phase $\phi1$ and the phase $\phi2$ may satisfy: $d\phi = |\phi1 - \phi2|$. In some examples, the preset phase difference $d\phi$ may be 90°, 60°, 45°, 30°, or the like. When values of the preset phase difference $d\phi$ are different, performance of the MRX 100 may be different, so that processes in which a digital module in a phased array system calibrates an amplitude and a phase of an intermediate frequency signal are different.

In some possible implementations, the MRX 100 may include a low noise amplifier 33. The low noise amplifier 33 is coupled between a receive end of the MRX 100 and the frequency mixer 32. The low noise amplifier 33 may amplify a radio frequency signal Stx transmitted through a TX channel, and then output an amplified signal to the frequency mixer 32. The receive end of the MRX 100 may be coupled to a coupler. The coupler may be configured to couple a transmitted signal output by the transmitter or through a transmit channel. The coupler may extract a partial signal from the transmitted signal, and is configured to monitor or calibrate the signal output by the transmitter or through the transmit channel. The coupler may provide a first signal for the MRX 100, and the first signal may be denoted as the radio frequency signal Stx. The phase switching module 31 may be coupled to a local oscillator, and receive a signal provided by the local oscillator. For ease of differentiation, a signal provided (or output) by the local oscillator is denoted as an oscillator signal Loin. The phase switching module 31 may process the signal provided by the local oscillator, and output the first local oscillator signal or the second local oscillator signal to the frequency mixer, where the phase of the first local oscillator signal is different from the phase of the second local oscillator signal. The frequency mixer 32 may perform frequency mixing on the first signal based on a signal provided by the phase switching module 31, to obtain an intermediate frequency signal.

Based on the MRX 100 provided in any one of the foregoing embodiments, as shown in FIG. 3, the MRX 100 may further include an intermediate frequency processor 34. An input end of the intermediate frequency processor 34 may be coupled to an output end of the frequency mixer 32. The intermediate frequency processor 34 may amplify the signal output by the frequency mixer 32.

In some possible implementations, the intermediate frequency processor 34 may include a trans-impedance amplifier TIA 34a. The TIA 34a may be coupled to the output end of the frequency mixer 32, to amplify the signal output by the frequency mixer 32. The intermediate frequency processor 34 may also include a filtering module 34b. The filtering module 34b may filter a received signal and then output a filtered signal to the digital module.

The MRX 100 may include one or more configuration states. When the MRX 100 is in different configuration states, the phase switching module 31 may output different signals. The following describes operating processes of the MRX 100 in different configuration states by using examples.

When the MRX 100 is in a first configuration state, the phase switching module 31 may provide the first local oscillator signal for the frequency mixer 32. The frequency mixer 32 receives the first local oscillator signal and the radio frequency signal Stx, and outputs a first intermediate frequency signal obtained through down conversion. A phase of the first intermediate frequency signal and the phase of the first local oscillator signal are the same, and both are $\phi 1$. The output end of the frequency mixer 32 is coupled to the TIA 34a, and the TIA 34a may amplify the first intermediate frequency signal and then output an amplified signal to the filtering module 34b. The filtering module 34b may filter the received signal and then output the filtered signal to the digital module.

When the MRX 100 is in a second configuration state, the phase switching module 31 may provide the second local oscillator signal for the frequency mixer 32. The frequency mixer 32 receives the second local oscillator signal and the radio frequency signal Stx, and outputs a second intermediate frequency signal obtained through down conversion. A phase of the second intermediate frequency signal and the phase of the second local oscillator signal are the same, and both are $\phi 2$. The output end of the frequency mixer 32 is coupled to the TIA, and the TIA may amplify the second intermediate frequency signal and then output an amplified signal to the filtering module. The filtering module may filter the received signal and then output the filtered signal to the digital module. In some scenarios, when the difference between the phase of the first local oscillator signal and the phase of the second local oscillator signal is 90°, the first local oscillator signal may be implemented as a signal (for example, an I-path intermediate frequency signal) obtained by amplifying the foregoing local oscillator in-phase signal, and the second local oscillator signal may be implemented as a signal (for example, a Q-path intermediate frequency signal) obtained by amplifying the foregoing local oscillator quadrature signal. Alternatively, the first local oscillator signal may be implemented as a signal (for example, a Q-path intermediate frequency signal) obtained by amplifying the foregoing local oscillator quadrature signal, and the second local oscillator signal may be implemented as a signal (for example, an I-path intermediate frequency signal) obtained by amplifying the foregoing local oscillator in-phase signal.

It can be learned from the foregoing description that the phase switching module 31 may have a capability of providing different signals for the frequency mixer 32 in a time-sharing manner, for example, providing the first local oscillator signal or the second local oscillator signal for the frequency mixer 32 in a time-sharing manner. The frequency mixer 32 may perform down conversion on the radio frequency signal Stx and the signal provided by the phase switching module 31 in a time-division manner. The frequency mixer 32 may generate the first intermediate frequency signal, or may generate the second intermediate frequency signal. It can be seen that both the first intermediate frequency signal and the second intermediate frequency signal are processed by a down conversion circuit including the phase switching module 31 and the frequency mixer 32. Such a design can reduce or weaken impact caused by inconsistency of amplification characteristics/frequency conversion characteristics of the two down conversion circuits in the conventional MRX. In addition, compared with the two down conversion circuits in the conventional MRX, the down conversion processing circuit including the phase switching module 31 and the frequency mixer 32 in the MRX 100 has lower power consumption and occupies a smaller chip area.

In the MRX 100 provided in this embodiment of this application, the phase switching module 31 may have a plurality of implementations, to implement the function of the phase switching module 31 in the foregoing example. The following describes the implementations of the phase switching module 31 by using examples. It should be understood that specific structures of phase switching modules 31 in the following examples may implement the function of the foregoing phase switching module 31, but this does not mean that there are only the specific structures of the phase switching modules 31 provided in embodiments of this application. In this field, a structure other than those in the following examples may be further used to implement the function of the phase switching module 31 in the foregoing example.

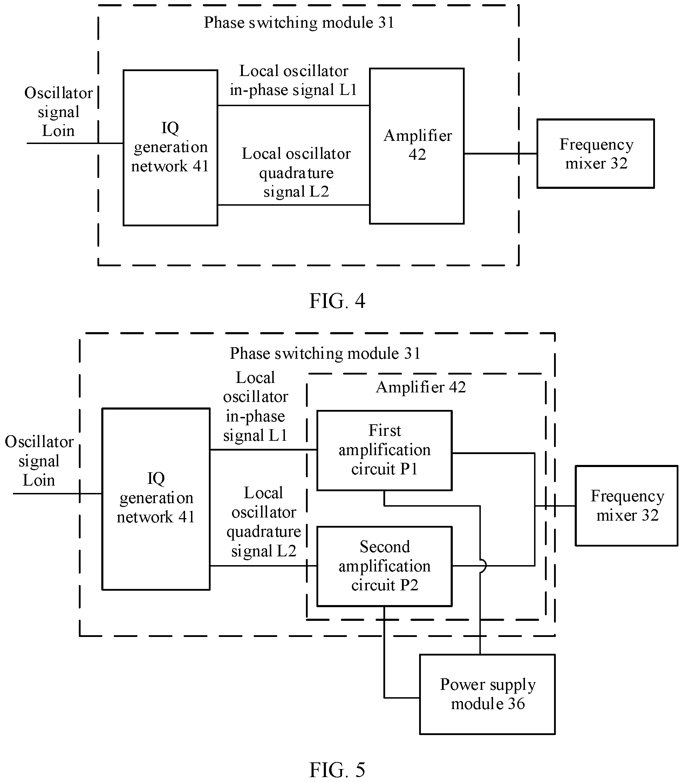

In a possible implementation, refer to FIG. 4. FIG. 4 is a diagram of a structure of a phase switching module 31 according to an example embodiment.

The phase switching module 31 may include an IQ generation network 41 and an amplifier 42. The IQ generation network 41 may receive a signal provided by a local oscillator, such as an oscillator signal Loin. The IQ generation network 41 may generate a local oscillator in-phase signal L1 and a local oscillator quadrature signal L2 based on the oscillator signal Loin. In some scenarios, a phase of the local oscillator in-phase signal L1 is the same as a phase of a first local oscillator signal. A phase of the local oscillator quadrature signal L2 is the same as a phase of a second local oscillator signal. A difference between the phase of the local oscillator in-phase signal L1 and the phase of the local oscillator quadrature signal is the same as the foregoing preset phase difference. In some examples, a first output end of the IQ generation network 41 may output the local oscillator in-phase signal L1, and a second output end of the IQ generation network may output the local oscillator quadrature signal L2.

In some examples, the IQ generation network 41 may be implemented as an IQ orthogonal generation network. The IQ orthogonal generation network generates the local oscillator in-phase signal L1 and the local oscillator quadrature signal L2 based on the oscillator signal Loin. A phase difference between the phase of the local oscillator in-phase signal L1 and the phase of the local oscillator quadrature signal is 90°. In other words, the preset phase difference in the foregoing example is 90°. In some scenarios, the phase of the local oscillator in-phase signal L1 is 0°, and the phase of the local oscillator quadrature signal L2 is 90°. Alternatively, the phase of the local oscillator in-phase signal L1 is 90°, and the phase of the local oscillator quadrature signal L2 is 0°.

The amplifier 42 is coupled to the output end of the IQ generation network 41, and may amplify a signal provided by the IQ generation network 41. The IQ generation network 41 may provide the local oscillator in-phase signal L1, and/or provide the local oscillator quadrature signal L2 for the amplifier 42. The amplifier 42 may provide the first local oscillator signal or the second local oscillator signal for a frequency mixer 32.

In a possible design, refer to FIG. 5. The amplifier 42 may include a plurality of signal amplification paths. For example, the amplifier 42 may include a first amplification circuit P1 and a second amplification circuit P2. An input side of the first amplification circuit P1 may be coupled to the first output end of the IQ generation network 41, and may receive the local oscillator in-phase signal L1. An output side of the first amplification circuit P1 may be coupled to the frequency mixer 32. The first amplification circuit P1 may amplify a received signal For example, the first amplification circuit P1 may amplify the local oscillator in-phase signal L1 to obtain the first local oscillator signal. In other words, the first local oscillator signal is a signal obtained by amplifying the local oscillator in-phase signal L1.

An input side of the second amplification circuit P2 may be coupled to the second output end of the IQ generation network 41, and may receive the local oscillator quadrature signal L2. The second amplification circuit P2 may amplify a received signal. For example, the second amplification circuit P2 may amplify the local oscillator quadrature signal L2 to obtain the second local oscillator signal. In other words, the second local oscillator signal is a signal obtained by amplifying the local oscillator quadrature signal L2.

The amplifier 42 may be coupled to a power supply module 36. The power supply module 36 may be coupled to a power supply end of the first amplification circuit P1, or may be coupled to a power supply end of the second amplification circuit P2. The power supply module 36 may provide an operating voltage for the first amplification circuit P1, so that the first amplification circuit P1 operates, for example, the first amplification circuit P1 amplifies the local oscillator in-phase signal L1. Similarly, the power supply module 36 may provide an operating voltage for the second amplification circuit P2, so that the second amplification circuit P2 operates, for example, the second amplification circuit P2 amplifies the local oscillator quadrature signal L2.

In this embodiment of this application, the power supply module 36 may provide the operating voltage for the first amplification circuit P1 and the second amplification circuit P2 in a time-sharing manner, so that one of the plurality of amplification circuits in the phase switching module 31 operates. In other words, the first amplification circuit P1 and the second amplification circuit P2 operate in a time-sharing manner, that is, in the first amplification circuit P1 and the second amplification circuit P2, one amplification circuit operates, and the other amplification circuit is in an off state. It is implemented that the amplifier 42 provides the first local oscillator signal and the second local oscillator signal for the frequency mixer 32 in a time-sharing manner. It can be learned that, in this design, an operating amplification circuit is switched to switch a signal output by the phase switching module 31.

When an MRX 100 is in a first configuration state, the power supply module 36 may provide the operating voltage for the first amplification circuit P1. The first amplification circuit P1 amplifies the local oscillator in-phase signal L1 to obtain the first local oscillator signal, and outputs the first local oscillator signal to the frequency mixer 32. The frequency mixer 32 may perform down conversion based on a radio frequency signal Stx sent through a TX channel and the first local oscillator signal, to generate a first intermediate frequency signal.

When an MRX 100 is in a second configuration state, the power supply module 36 may provide the operating voltage for the second amplification circuit P2. The second amplification circuit P2 amplifies the local oscillator quadrature signal L2 to obtain the second local oscillator signal, and outputs the second local oscillator signal to the frequency mixer 32. The frequency mixer 32 may perform down conversion based on a radio frequency signal Stx sent through a TX channel and the second local oscillator signal, to generate a second intermediate frequency signal.

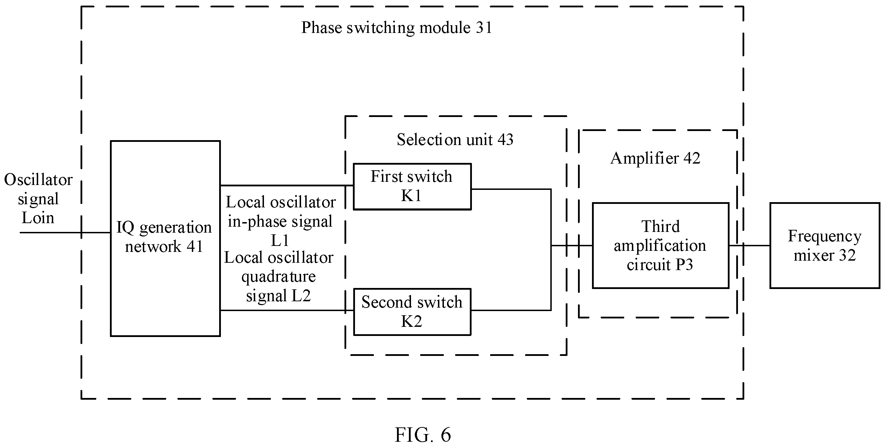

In a possible design, refer to FIG. 6. The amplifier 42 may include one signal amplification path. For example, the amplifier 42 may include a third amplification circuit P3 that may also be referred to as a drive amplification circuit. The phase switching module 31 may further include a selection unit 43.

The selection unit 43 may selectively provide the local oscillator in-phase signal and the local oscillator quadrature signal for the third amplification circuit P3. The selection unit 43 may include a plurality of switches, and the plurality of switches are coupled to the IQ generation network 41. The plurality of switches may include a first switch K1 and a second switch K2. The first switch K1 is coupled to the first output end of the IQ generation network 41, and the second switch K2 is coupled to the second output end of the IQ generation network 41. The first switch K1 may control a transmission channel of the local oscillator in-phase signal, and the second switch K2 may control a transmission channel of the local oscillator quadrature signal. A signal can be transmitted to the third amplification circuit P3 by controlling the first switch K1 and the second switch K2.

In a possible implementation, refer to FIG. 6. The first output end of the IQ generation network 41 may be coupled to the third amplification circuit P3 through the first switch K1. A first end of the first switch K1 may be coupled to the first output end of the IQ generation network 41, and a second end of the first switch K2 may be coupled to the third amplification circuit P3. The second output end of the IQ generation network 41 may be coupled to the third amplification circuit P3 through the second switch K2. A first end of the second switch K2 may be coupled to the second output end of the IQ generation network 41, and a second end of the second switch K2 is coupled to the third amplification circuit P3.

When the first switch K1 is in an on state, the first output end of the IQ generation network 41 is connected to the third amplification circuit P3, and the first switch K1 may transmit the local oscillator in-phase signal L1 to the third amplification circuit P3. The third amplification circuit P3 may amplify the local oscillator in-phase signal L1. When the first switch K1 is in an off state, the first output end of the IQ generation network 41 is disconnected from the third amplification circuit P3, and the local oscillator in-phase signal L1 cannot be transmitted to the third amplification circuit P3.

Similarly, when the second switch K2 is in an on state, the second output end of the IQ generation network 41 is connected to the third amplification circuit P3, and the second switch K2 may transmit the local oscillator quadrature signal L2 to the third amplification circuit P3. The third amplification circuit P3 may amplify the local oscillator quadrature signal L2. When the second switch K2 is in an off state, the second output end of the IQ generation network 41 is disconnected from the third amplification circuit P3, and the local oscillator quadrature signal L2 cannot be transmitted to the third amplification circuit P3.

In this embodiment of this application, the selection unit 43 adjusts an operating state of the first switch K1 and an operating state of the second switch K2, to adjust a signal input to the third amplification circuit P3. For example, when the first switch K1 is in the on state and the second switch K2 is in the off state, the third amplification circuit P3 may receive the local oscillator in-phase signal L1, and process the local oscillator in-phase signal L1. For another example, when the first switch K1 is in the off state and the second switch K2 is in the on state, the third amplification circuit P3 may receive the local oscillator quadrature signal L2, and process the local oscillator quadrature signal L2.

When the MRX 100 is in the first configuration state, the first switch K1 is configured to be in the on state, and the second switch K2 is configured to be in the off state. The first switch K1 may provide the local oscillator in-phase signal L1 for the third amplification circuit P3. The third amplification circuit P3 amplifies the local oscillator in-phase signal L1 to obtain the first local oscillator signal, and outputs the first local oscillator signal to the frequency mixer 32. The frequency mixer 32 may perform down conversion based on the radio frequency signal Stx sent through the TX channel and the first local oscillator signal, to generate the first intermediate frequency signal.

When the MRX 100 is in the second configuration state, the first switch K1 is configured to be in the off state, and the second switch K2 is configured to be in the on state. The second switch K2 may provide the local oscillator quadrature signal L2 for the third amplification circuit P3. The third amplification circuit P3 amplifies the local oscillator quadrature signal L2 to obtain the second local oscillator signal, and outputs the second local oscillator signal to the frequency mixer 32. The frequency mixer 32 may perform down conversion based on the radio frequency signal Stx sent through the TX channel and the second local oscillator signal, to generate the second intermediate frequency signal.

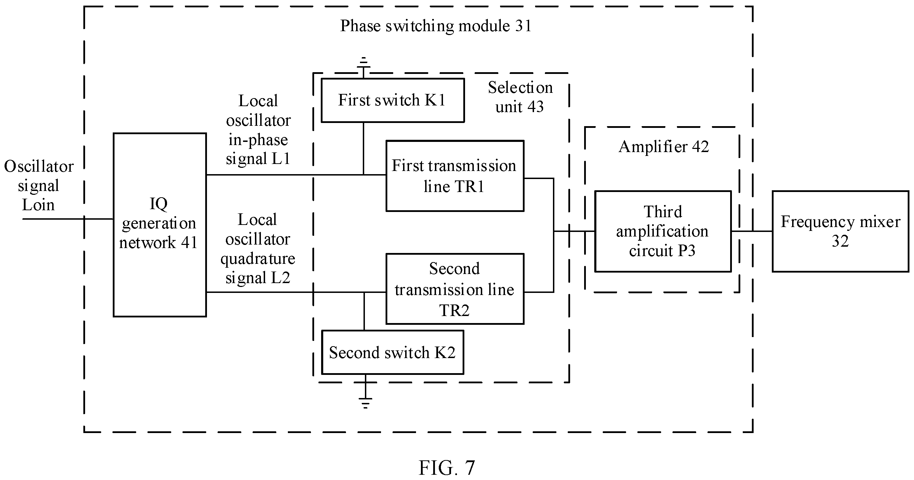

In another possible implementation, refer to FIG. 7. The selection unit 43 may include the first switch K1, the second switch K2, a first transmission line TR1, and a second transmission line TR2. A first end of the first transmission line TR1 is coupled to the first output end of the IQ generation network 41, and the first end of the first transmission line TR1 is coupled to a ground end through the first switch K1. A second end of the first transmission line TR1 is coupled to the third amplification circuit P3. In such a design, good isolation between transmission of the local oscillator in-phase signal L1 and transmission of the local oscillator quadrature signal L2 can be achieved. When the first switch K1 is in an off state, the first output end of the IQ generation network 41 is disconnected from the ground end. In this case, the first transmission line TR1 may receive the local oscillator in-phase signal L1 output by the IQ generation network 41, and transmit the local oscillator in-phase signal L1 to the third amplification circuit P3. When the first switch K1 is in an on state, the first output end of the IQ generation network 41 is connected to the ground end. In this case, the local oscillator in-phase signal L 1 is transmitted to the ground end through the first switch K1, and the first transmission line TR1 fails to receive the local oscillator in-phase signal L 1.

A first end of the second transmission line TR2 is coupled to the second output end of the IQ generation network 41, and the first end of the second transmission line TR2 is coupled to a ground end through the second switch K2. A second end of the second transmission line TR2 is coupled to the third amplification circuit P3. When the second switch K2 is in an off state, the second output end of the IQ generation network 41 is disconnected from the ground end. In this case, the second transmission line TR2 may receive the local oscillator quadrature signal L2 output by the IQ generation network 41, and transmit the local oscillator quadrature signal L2 to the third amplification circuit P3. When the second switch K2 is in an on state, the second output end of the IQ generation network 41 is connected to the ground end. In this case, the local oscillator quadrature signal L2 is transmitted to the ground end through the second switch K2. Therefore, the second transmission line TR2 fails to receive the local oscillator quadrature signal L2.

It can be seen that the on/off state of the first switch K1 and the on/off state of the second switch K2 are switched, to adjust the signal input to the third amplification circuit P3, namely, the local oscillator in-phase signal L1 or the local oscillator quadrature signal L2. The third amplification circuit P3 may amplify a received signal, and output an amplified signal to the frequency mixer 32. For example, the third amplification circuit P3 amplifies the local oscillator in-phase signal L1 to obtain the first local oscillator signal, and outputs the first local oscillator signal to the frequency mixer 32. The third amplification circuit P3 amplifies the local oscillator quadrature signal L2 to obtain the second local oscillator signal, and outputs the second local oscillator signal to the frequency mixer 32.

When the MRX 100 is in the first configuration state, the first switch K1 is configured to be in the off state, and the second switch K2 is configured to be in the on state. The first transmission line TR1 may provide the local oscillator in-phase signal L1 for the third amplification circuit P3. The third amplification circuit P3 amplifies the local oscillator in-phase signal L1 to obtain the first local oscillator signal, and outputs the first local oscillator signal to the frequency mixer 32. The frequency mixer 32 may perform down conversion based on the radio frequency signal Stx sent through the TX channel and the first local oscillator signal, to generate the first intermediate frequency signal.

When the MRX 100 is in the second configuration state, the first switch K1 is configured to be in the on state, and the second switch K2 is configured to be in the off state. The second transmission line TR2 may provide the local oscillator quadrature signal L2 for the third amplification circuit P3. The third amplification circuit P3 amplifies the local oscillator quadrature signal L2 to obtain the second local oscillator signal, and outputs the second local oscillator signal to the frequency mixer 32. The frequency mixer 32 may perform down conversion based on the radio frequency signal Stx sent through the TX channel and the second local oscillator signal, to generate the second intermediate frequency signal.

It should be noted that the switch in this embodiment of this application may be one or more of multiple types of switching transistors such as a relay, a metal oxide semiconductor (metal oxide semiconductor, MOS) transistor, a bipolar junction transistor (bipolar junction transistor, BJT), and an insulated gate bipolar transistor (insulated gate bipolar transistor, IGBT). This is not listed one by one in embodiments of this application. Each switching transistor may include a first electrode, a second electrode, and a control electrode, and the control electrode is configured to control on or off of the switching transistor. When the switching transistor is on, a current can be transmitted between the first electrode and the second electrode of the switching transistor. When the switching transistor is off, no current can be transmitted between the first electrode and the second electrode of the switching transistor. A MOSFET is used as an example. A control electrode of the switching transistor is a gate, a first electrode of the switching transistor may be a source of the switching transistor, and a second electrode may be a drain of the switching transistor. Alternatively, a first electrode may be a drain of the switching transistor, and a second electrode may be a source of the switching transistor.

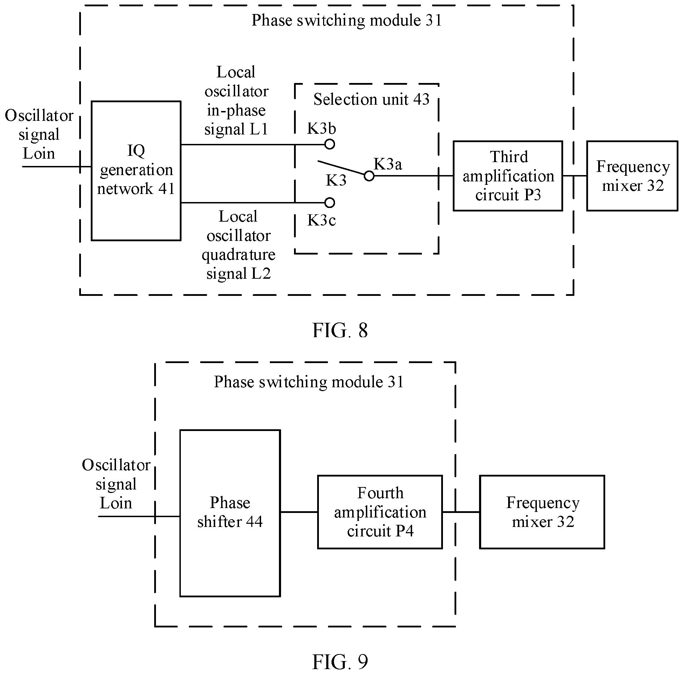

In still another possible implementation, refer to FIG. 8. FIG. 8 is a diagram of a structure of the phase switching module 31 according to an example embodiment. The selection unit 43 in the phase switching module 31 may include a single-pole multi-throw switch K3. The single-pole multi-throw switch K3 may include a throwable part K3a, a first contact end K3b, and a second contact end K3c. The throwable part K3a is coupled to the third amplification circuit P3, and the first contact end K3b is coupled to the first output end of the IQ generation network 41. The second contact end K3c is coupled to the second output end of the IQ generation network 41.

When the throwable part K3a is connected to the first contact end K3b, the local oscillator in-phase signal L1 output by the IQ generation network 41 may be transmitted to the third amplification circuit P3. When the throwable part K3a is connected to the second contact end K3c, the local oscillator quadrature signal L2 output by the IQ generation network 41 may be transmitted to the third amplification circuit P3.

When the MRX 100 is in the first configuration state, the throwable part K3a of the single-pole multi-throw switch K3 is configured to be connected to the first contact end K3b, and the throwable part K3a is configured to be disconnected from the second contact end K3c. The single-pole multi-throw switch K3 may transmit the local oscillator in-phase signal L1 to the third amplification circuit P3. The third amplification circuit P3 amplifies the local oscillator in-phase signal L1 to obtain the first local oscillator signal, and outputs the first local oscillator signal to the frequency mixer 32. The frequency mixer 32 may perform down conversion based on the radio frequency signal Stx sent through the TX channel and the first local oscillator signal, to generate the first intermediate frequency signal.

When the MRX 100 is in the second configuration state, the throwable part K3a of the single-pole multi-throw switch K3 is configured to be disconnected from the first contact end K3b, and the throwable part K3a is configured to be connected to the second contact end K3c. The single-pole multi-throw switch K3 may provide the local oscillator quadrature signal L2 for the third amplification circuit P3. The third amplification circuit P3 amplifies the local oscillator quadrature signal L2 to obtain the second local oscillator signal, and outputs the second local oscillator signal to the frequency mixer 32. The frequency mixer 32 may perform down conversion based on the radio frequency signal Stx sent through the TX channel and the second local oscillator signal, to generate the second intermediate frequency signal.

In another possible implementation, refer to FIG. 9. FIG. 9 is a diagram of a structure of the phase switching module 31 according to an example embodiment. The phase switching module 31 may include a phase shifter 44 and a fourth amplification circuit P4. An input side of the phase shifter 44 may receive the oscillator signal Loin. An output side of the phase shifter 44 is coupled to the fourth amplification circuit P4. The phase shifter 44 may selectively perform phase shifting on the oscillator signal Loin, and then output the phase-shifted signal to the fourth amplification circuit P4. The fourth amplification circuit P4 is coupled to the frequency mixer 32, and may amplify a signal provided by the phase shifter 44 and then output an amplified signal to the frequency mixer 32.

The phase shifter 44 may selectively perform phase shifting on the oscillator signal Loin, and then output the phase-shifted signal to the fourth amplification circuit P4. The phase shifter 44 may not perform phase shifting on the received oscillator signal Loin, and output the oscillator signal Loin to the fourth amplification circuit P4. The phase shifter 44 may alternatively perform phase shifting on the received oscillator signal Loin to obtain a third signal L3. A difference between a phase of the third signal L3 and a phase of the oscillator signal Loin may be the foregoing preset phase difference. The fourth amplification circuit P4 may obtain the foregoing first local oscillator signal by amplifying the oscillator signal Loin. The fourth amplification circuit P4 may obtain the foregoing second local oscillator signal by amplifying the third signal L3.

When the MRX 100 is in the first configuration state, the phase shifter 44 may be configured not to perform phase shifting on the received oscillator signal Loin, and configured to output the oscillator signal Loin to the fourth amplification circuit P4. In other words, the phase shifter 44 may be configured to provide the received oscillator signal Loin for the fourth amplification circuit P4.

When the MRX 100 is in the second configuration state, the phase shifter 44 may be configured to: perform phase shifting on the oscillator signal Loin to obtain the third signal L3, and output the third signal L3 to the fourth amplification circuit P4.

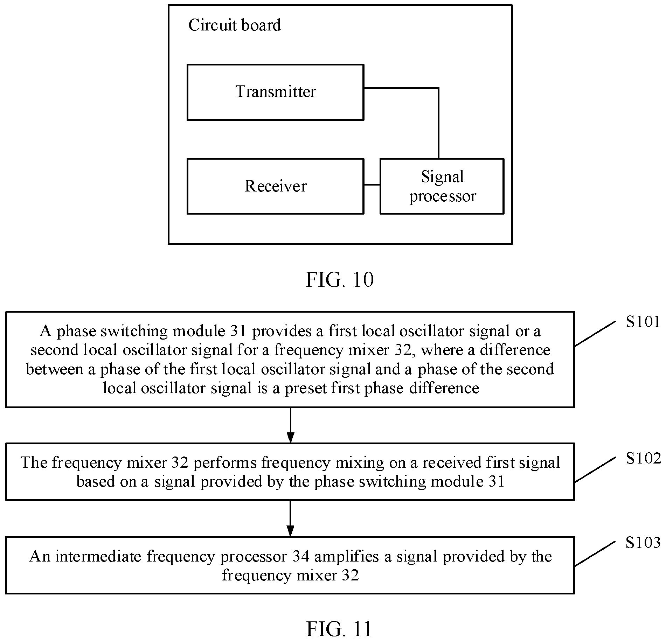

Based on a same concept, an embodiment of this application further provides an electronic device. Refer to FIG. 10. The electronic device may include a receiver, a transmitter, and a circuit board. The transmitter may be disposed on the circuit board, and the receiver may be disposed on the circuit board. The receiver may be the MRX 100 provided in any one of the foregoing embodiments. The MRX 100 may also be disposed on the circuit board. The electronic device may be implemented as a communication device, and the transmitter may send a radio frequency signal. The receiver may process, for example, down-convert a signal coupled at the transmitter. A signal obtained by processing the signal coupled by the transmitter by the MRX 100 is an intermediate frequency signal. The electronic device may further include a signal processor, and the signal processor may be implemented as the foregoing digital module. The signal processor may calibrate, based on the intermediate frequency signal output by the MRX 100, for example, an amplitude and/or a phase of the intermediate frequency signal, the radio frequency signal sent by the transmitter. In some examples, the electronic device may include one or more transmitters and at least one MRX 100. The MRX 100 may receive a signal coupled by at least one transmitter.

Based on a same concept, this application further provides a signal processing method, and the method may be implemented or performed by a receiver. As shown in FIG. 11, the method may include one or more of the following steps.

Step S101: A phase switching module 31 provides a first local oscillator signal or a second local oscillator signal for a frequency mixer 32, where a difference between a phase of the first local oscillator signal and a phase of the second local oscillator signal is a preset first phase difference.

The phase switching module 31 may have a capability of generating the first local oscillator signal or the second local oscillator signal. In an operation of generating the first local oscillator signal or the second local oscillator signal by the phase switching module 31, an IQ generation network of the phase switching module 31 may generate a local oscillator in-phase signal L1 and a local oscillator quadrature signal L2 based on a received local oscillator signal. In some examples, in the phase switching module 31 shown in FIG. 5, the first amplification circuit P1 may amplify the local oscillator in-phase signal L1 to obtain the first local oscillator signal. Alternatively, the second amplification circuit P2 may amplify the local oscillator quadrature signal L2 to obtain the second local oscillator signal. The power supply module 36 provides the operating voltage for either of the first amplification circuit P1 and the second amplification circuit P2, to control one amplification circuit to amplify a received signal and output an amplified signal to the frequency mixer 32.

In some other examples, in the phase switching modules 31 shown in FIG. 6 to FIG. 8, the selection unit 43 may provide either of the local oscillator in-phase signal L1 and the local oscillator quadrature signal L2 for the amplifier 42. The amplifier 42 may amplify the received local oscillator in-phase signal L1 to obtain the first local oscillator signal, or amplify the received local oscillator quadrature signal L2 to obtain the second local oscillator signal.

In some other examples, in the phase switching module shown in FIG. 8, the phase shifter 44 may perform phase shifting on the received oscillator signal Loin to obtain the local oscillator quadrature signal L2. The phase shifter 44 does not perform phase shifting on the received oscillator signal Loin, and directly provides the oscillator signal Loin as the local oscillator in-phase signal L1 for the third amplification circuit P3. The third amplification circuit P3 may amplify the local oscillator in-phase signal L1 to obtain the first local oscillator signal; or the third amplification circuit P3 may amplify the local oscillator quadrature signal L2 to obtain the second local oscillator signal.

Step S102: The frequency mixer 32 performs frequency mixing on a received first signal based on a signal provided by the phase switching module 31.

Step S103: An intermediate frequency processor 34 amplifies a signal provided by the frequency mixer 32.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A receiver, configured to receive a first signal, wherein the receiver comprises a frequency mixer, a phase switching module, and an intermediate frequency processor, wherein

    the phase switching module is coupled to the frequency mixer, the phase switching module is configured to provide a first local oscillator signal for the frequency mixer or provide a second local oscillator signal for the frequency mixer, and a difference between a phase of the first local oscillator signal and a phase of the second local oscillator signal is a first phase difference;
    the frequency mixer is coupled to the intermediate frequency processor, and is configured to: receive a signal provided by the phase switching module, perform frequency mixing on the first signal based on the signal provided by the phase switching module, and provide a signal obtained through frequency mixing for the intermediate frequency processor; and
    the intermediate frequency processor is configured to amplify the signal provided by the frequency mixer.

2. The receiver according to claim 1, wherein the first signal is coupled to a transmitted signal output by a transmitter

3. The receiver according to claim 1 or 2, wherein the receiver further comprises a low noise amplifier; and the low noise amplifier is coupled to the frequency mixer, and is configured to: amplify the received first signal, and then provide an amplified first signal for the frequency mixer.

4. The receiver according to any one of claims 1 to 3, wherein the first phase difference is 90°.

5. The receiver according to any one of claims 1 to 4, wherein the phase switching module comprises an in-phase (in-phase, I)/quadrature (quadrature, Q) generation network and an amplifier;

    the IQ generation network is used to generate a local oscillator in-phase signal and a local oscillator quadrature signal based on a signal provided by a local oscillator; and
    the amplifier is configured to amplify a signal provided by the IQ generation network.

6. The receiver according to claim 5, wherein the amplifier is configured to: amplify the local oscillator in-phase signal to obtain the first local oscillator signal; and/or amplify the local oscillator quadrature signal to obtain the second local oscillator signal.

7. The receiver according to claim 5 or 6, wherein the amplifier comprises a first amplification circuit and a second amplification circuit; the first amplification circuit is coupled to a power supply module, the first amplification circuit is coupled to the frequency mixer, and the first amplification circuit is coupled to the IQ generation network; and the second amplification circuit is coupled to the power supply module, the second amplification circuit is coupled to the frequency mixer, and the second amplification circuit is coupled to the IQ generation network;

    the power supply module is configured to provide an operating voltage for the first amplification circuit or the second amplification circuit; the first amplification circuit is configured to: driven by the operating voltage, amplify the local oscillator in-phase signal and then output an amplified signal to the frequency mixer; and the second amplification circuit is configured to: driven by the operating voltage, amplify the local oscillator quadrature signal and then output an amplified signal to the frequency mixer.

8. The receiver according to claim 5 or 6, wherein the phase switching module further comprises a selection unit; the amplifier comprises a third amplification circuit; and the selection unit is coupled to the IQ generation network, and the selection unit is coupled to the third amplification circuit;

    the selection unit is configured to selectively provide the local oscillator in-phase signal and the local oscillator quadrature signal for the third amplification circuit; and the third amplification circuit is configured to amplify a signal provided by the selection unit and output an amplified signal to the frequency mixer.

9. The receiver according to claim 8, wherein the selection unit comprises a single-pole multi-throw switch, wherein a throwable part of the single-pole multi-throw switch is coupled to the third amplification circuit; a first contact end of the single-pole multi-throw switch is coupled to a first end of the IQ generation network, and the first contact end is configured to receive the local oscillator in-phase signal; and a second contact end of the single-pole multi-throw switch is coupled to a second end of the IQ generation network, and the second contact end is configured to receive the local oscillator quadrature signal.

10. The receiver according to claim 8, wherein the selection unit comprises a first switch and a second switch, wherein

    the first switch is configured to control transmission of the local oscillator in-phase signal; and the second switch is configured to control transmission of the local oscillator quadrature signal.

11. The receiver according to claim 10, wherein a first end of the first switch is coupled to the IQ generation network, and a second end of the first switch is coupled to the third amplification circuit; and a first end of the second switch is coupled to the IQ generation network, and a second end of the second switch is coupled to the third amplification circuit.

12. The receiver according to claim 10, wherein the selection unit further comprises a first transmission line and a second transmission line, wherein

    a first end of the first transmission line is coupled to a ground end through the first switch, the first end of the first transmission line is coupled to the IQ generation network, and a second end of the first transmission line is coupled to the third amplification circuit; and a first end of the second transmission line is coupled to the ground end through the second switch, the first end of the second transmission line is coupled to the IQ generation network, and a second end of the second transmission line is coupled to the third amplification circuit.

13. The receiver according to claim 1, wherein the phase switching module comprises a phase shifter and a fourth amplification circuit, wherein the phase shifter is coupled to the fourth amplification circuit, and the fourth amplification circuit is coupled to the frequency mixer;

    the phase shifter is configured to: receive a local oscillator signal; and selectively perform phase shifting on the local oscillator signal, and output a signal obtained through phase shifting on the local oscillator signal to the fourth amplification circuit, wherein the first local oscillator signal is an amplified signal of the local oscillator signal, the second local oscillator signal is an amplified signal of a third signal, the third signal is the signal obtained through phase shifting on the local oscillator signal, and a difference between a phase of the third signal and a phase of the local oscillator signal is a preset phase difference; and the fourth amplification circuit is configured to: amplify the signal output by the phase shifter, and output an amplified signal to the frequency mixer

14. A communication device, wherein the device comprises the receiver according to any one of claims 1 to 13, a transmitter, and a circuit board, wherein

the transmitter is disposed on the circuit board and is configured to transmit a signal; and
the receiver is disposed on the circuit board, and is configured to: receive a first signal, and perform frequency mixing on the first signal, wherein the first signal is coupled to the transmitted signal output by the transmitter

15. The device according to claim 14, wherein the device further comprises a signal processor, wherein
the signal processor is configured to calibrate the transmitted signal from the transmitter based on a signal provided by the receiver.

16. A signal processing method, wherein the method comprises:

providing, by a phase switching module, a first local oscillator signal or a second local oscillator signal for a frequency mixer, wherein a difference between a phase of the first local oscillator signal and a phase of the second local oscillator signal is a preset first phase difference;
performing, by the frequency mixer, frequency mixing on a received first signal based on a signal provided by the phase switching module; and
amplifying, by an intermediate frequency processor, a signal provided by the frequency mixer.

17. The method according to claim 16, wherein the providing, by a phase switching module, a first local oscillator signal for a frequency mixer or providing a second local oscillator signal for a frequency mixer comprises:

generating, by an in-phase/quadrature IQ generation network, a local oscillator in-phase signal and a local oscillator quadrature signal based on a signal provided by a local oscillator; and
amplifying, by an amplifier, a signal provided by the IQ generation network.

18. The method according to claim 17, wherein the amplifying, by an amplifier, a signal provided by the IQ generation network comprises:

amplifying the local oscillator in-phase signal to obtain the first local oscillator signal; and/or
amplifying the local oscillator quadrature signal to obtain the second local oscillator signal.

19. The method according to claim 18, wherein the amplifying, by an amplifier, a signal provided by the IQ generation network further comprises:

providing an operating voltage for a first amplification circuit or a second amplification circuit;
the amplifying the local oscillator in-phase signal to obtain the first local oscillator signal comprises:

amplifying, by the first amplification circuit, the local oscillator in-phase signal; and
the amplifying the local oscillator quadrature signal to obtain the second local oscillator signal comprises:
amplifying, by the second amplification circuit, the local oscillator quadrature signal.

20. The method according to claim 17, wherein the providing, by a phase switching module, a first local oscillator signal for a frequency mixer or providing a second local oscillator signal for a frequency mixer further comprises:

selectively providing, by a selection unit, the local oscillator in-phase signal or the local oscillator quadrature signal for a third amplification circuit; and
the amplifying, by an amplifier, a signal provided by the IQ generation network comprises:
amplifying, by the third amplification circuit, a signal provided by the selection unit, and outputting an amplified signal to the frequency mixer.

21. The method according to claim 20, wherein the selectively providing, by a selection unit, the local oscillator in-phase signal or the local oscillator quadrature signal for a third amplification circuit comprises:

controlling a first switch or controlling a second switch, wherein
the first switch is configured to control transmission of the local oscillator in-phase signal, and the second switch is configured to control transmission of the local oscillator quadrature signal.

Transceiver

Transmit (TX) channel

Transmit (TX) channel

Calibration

Coupler

Mirror receiver MRX

Intermediate frequency signal

Digital module

Radio frequency signal

FIG. 1

FIG. 2

FIG. 3

Phase switching module 31

Oscillator signal Loin

IQ generation network 41

Local oscillator in-phase signal L1

Local oscillator quadrature signal L2

Amplifier 42

Frequency mixer 32

FIG. 4

Phase switching module 31

Oscillator signal Loin

IQ generation network 41

Local oscillator in-phase signal L1

Local oscillator quadrature signal L2

Amplifier 42

First amplification circuit P1

Second amplification circuit P2

Frequency mixer 32

Power supply module 36

FIG. 5

EP 4 492 696 A1

FIG. 6

EP 4 492 696 A1

Phase switching module 31

Oscillator
signal
Loin

IQ
generation
network 41

Local
oscillator
in-phase
signal L1

Local
oscillator
quadrature
signal L2

Selection
unit 43

First switch K1

First transmission
line TR1

Second
transmission line
TR2

Second switch K2

Amplifier 42

Third
amplification
circuit P3

Frequency mixer
32

FIG. 7

Phase switching module 31

Local
oscillator
in-phase
signal L1

Selection unit 43

K3b

Oscillator
signal
Loin

IQ
generation
network 41

K3a

K3

Third
amplification
circuit P3

Frequency
mixer 32

K3c

Local
oscillator
quadrature
signal L2

FIG. 8

Phase switching module 31

Oscillator
signal
Loin

Phase
shifter 44

Fourth
amplification
circuit P4

Frequency
mixer 32

FIG. 9

Circuit board

Transmitter

Receiver

Signal processor

FIG. 10

A phase switching module 31 provides a first local oscillator signal or a second local oscillator signal for a frequency mixer 32, where a difference between a phase of the first local oscillator signal and a phase of the second local oscillator signal is a preset first phase difference — S101

The frequency mixer 32 performs frequency mixing on a received first signal based on a signal provided by the phase switching module 31 — S102

An intermediate frequency processor 34 amplifies a signal provided by the frequency mixer 32 — S103

FIG. 11

<div style="text-align:center">**INTERNATIONAL SEARCH REPORT**</div>

| International application No. |
|---|
| **PCT/CN2022/084546** |

**A. CLASSIFICATION OF SUBJECT MATTER**

H04B 1/16(2006.01)i

According to International Patent Classification (IPC) or to both national classification and IPC

**B. FIELDS SEARCHED**

Minimum documentation searched (classification system followed by classification symbols)

H04B

Documentation searched other than minimum documentation to the extent that such documents are included in the fields searched

Electronic data base consulted during the international search (name of data base and, where practicable, search terms used)

CNABS; CNTXT; CNKI; VEN; DWPI; EPTXT; USTXT; WOTXT; IEEE: 接收, 本振, 移相, 低噪放, 发射, 相位, 相控, 选通, 控制, 振荡信号, 放大, 耦合, 切换, 变频, 改变, 变化, 功放, 开关, LO, receiver, mix, oscillate, switch, phase, shift, amplify, change, control, couple

**C. DOCUMENTS CONSIDERED TO BE RELEVANT**

| Category* | Citation of document, with indication, where appropriate, of the relevant passages | Relevant to claim No. |
|---|---|---|
| X | US 2018372839 A1 (HONEYWELL INTERNATIONAL INC.) 27 December 2018 (2018-12-27) description, paragraphs [0022]-[0073], and figures 1-10B | 1-21 |
| X | CN 111401087 A (HUADA SEMICONDUCTOR CO., LTD.) 10 July 2020 (2020-07-10) description, paragraphs [0050]-[0089], and figures 1-3 | 1-21 |
| A | CN 1874167 A (DINGXIN COMMUNICATION (SHANGHAI) CO., LTD.) 06 December 2006 (2006-12-06) entire document | 1-21 |
| A | CN 102332928 A (SEIKO EPSON CORP.) 25 January 2012 (2012-01-25) entire document | 1-21 |
| A | CN 1801634 A (DINGXIN SEMICONDUCTOR (SHANGHAI) CO., LTD.) 12 July 2006 (2006-07-12) entire document | 1-21 |
| A | US 2005032486 A1 (QUORUM SYSTEMS) 10 February 2005 (2005-02-10) entire document | 1-21 |

☐ Further documents are listed in the continuation of Box C.   ☑ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **20 September 2022** | **29 September 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/084546**

| Patent document cited in search report | | | Publication date (day/month/year) | Patent family member(s) | | | Publication date (day/month/year) |
|---|---|---|---|---|---|---|---|
| US | 2018372839 | A1 | 27 December 2018 | EP | 3422047 | A1 | 02 January 2019 |
| | | | | US | 10627482 | B2 | 21 April 2020 |
| CN | 111401087 | A | 10 July 2020 | None | | | |
| CN | 1874167 | A | 06 December 2006 | CN | 100426686 | C | 15 October 2008 |
| CN | 102332928 | A | 25 January 2012 | JP | 2011250056 | A | 08 December 2011 |
| | | | | US | 2011292290 | A1 | 01 December 2011 |
| | | | | JP | 5633191 | B2 | 03 December 2014 |
| CN | 1801634 | A | 12 July 2006 | CN | 100472976 | C | 25 March 2009 |
| US | 2005032486 | A1 | 10 February 2005 | WO | 2004086637 | A2 | 07 October 2004 |
| | | | | WO | 2004086637 | A8 | 25 November 2004 |
| | | | | WO | 2004086637 | A3 | 28 July 2005 |
| | | | | US | 7031672 | B2 | 18 April 2006 |

Form PCT/ISA/210 (patent family annex) (January 2015)